# EUROPEAN PATENT SPECIFICATION

(11) **EP 1 672 879 B1**
(45) Date of publication and mention of the grant of the patent: **07.03.2012**
(21) Application number: 05112018.6
(22) Date of filing: 13.12.2005
(51) Int. Cl.: H04M 1/02, G06F 1/16

(54) **Hinge structure of folding type mobile communication device**
Scharniergelenk für ein klappbares tragbares Funkgerät
Charnière pour appareil de communication mobile pliable

(30) Priority: 17.12.2004 JP 2004366405
(43) Date of publication of application: 21.06.2006
(73) Proprietor: NEC Corporation, Minato-ku Tokyo 108-8001 (JP)
(72) Inventor: Iikura, Kenji, c/o NEC Corporation, Tokyo (JP)
(74) Representative: Betten & Resch

(56) References cited:
- EP-A2- 0 777 369
- US-A- 6 076 232
- US-A1- 2004 142 735
- US-A1- 2005 225 952

## Description

### FIELD OF THE INVENTION

The present invention relates to a mobile communication device and its hinge structure, more specifically to a folding type mobile communication device and its hinge structure.

### BACKGROUND OF THE INVENTION

A folding type mobile communication device comprises two cases that can be folded if it is not in use but unfolded if it is to be used, thereby featuring miniaturization while providing sufficient operation area. This is the reason why such type of mobile communication device is gaining popularity in the marketplace. A folding type mobile communication device is provided with a hinge structure at adjacent edge portions of the two cases for enabling the both cases to be interconnected in such a manner to mutually pivot about the hinge structure. The hinge structure of such mobile communication device requires high mechanical strength to tolerate shock or the like. The hinge structure is also required to have a construction for enabling a wiring cable that interconnects the two cases to pass through the hinge structure.

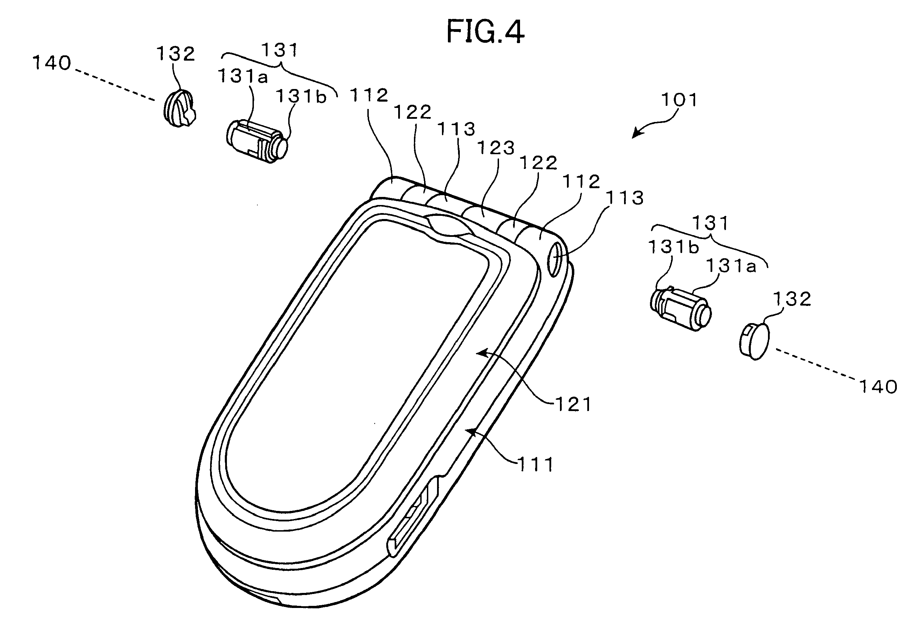

Fig. 4 shows a conventional folding type mobile communication device with the hinge structure disassembled. The mobile communication device 101 comprises a lower case 111 for housing various operation keys, a microphone, an antenna and the like, and an upper case 121 for housing a liquid crystal display device, a speaker and the like. The lower case 111 and the upper case 121 are pivotally coupled to each other by a pair of pivotal shafts 131 to be inserted into hinge portions at one edge portions of these cases, thereby enabling to take a folded position in which both lower case 111 and upper case 121 are brought to a close relationship to each other and an unfolded position in which both lower case 111 and upper case 121 are spread in a relatively flat relationship. Each pivotal shaft 131 comprises shaft portions 131a and 131b coupled to each other in such a manner to mutually rotate about an axis 140.

The lower case 111 is formed with a pair of hinge portions 112 at both ends of the mobile communication device 101 along the axis 140 for supporting the shaft portions 131a. The upper case 121 I formed with hinge portions 122 adjacent to and inside of the hinge portions 112 along the axis 140 for supporting the shaft portions 131b. The shaft portions 131a and 131b have particular shapes to adapt to and engage with bearing portions of hinge portions 112 and 122, respectively. Each pivotal shaft 131 is provided with a click mechanism therein for cooperating with the shaft portions 131a and 131b. The click mechanism ensures to fix the lower case 111 and the upper case 121 at either the folded position or the unfolded position in a snapping manner.

The shaft portions 131a and 131b engage with the respective bearing portions of the hinge portions 112 and 122 by inserting the pivotal shafts 131 into insertion holes 113 at both sides of the lower case 111 with the shaft portions 131b ahead. The pivotal shafts 131 are sealed with hinge caps 132 for preventing the pivotal shafts 131 from dropping and for maintaining better outer appearance of the mobile communication device 101.

The lower case 111 is formed with a hollow hinge portion 113 at the locations adjacent to and inside of the hinge portions 122 along the axis 140. On the other hand, the upper case 121 is formed with a hollow hinge portion 123 at the location inside of the hinge portions 122 along the, axis 140. As a result, the hinge portions 113 and 123 are located next to each other. In the hinge portions 113 and 123, mutually adjacent faces are cut out for allowing a flexible circuit board (not shown) for interconnecting the lower case 111 and the upper case 121 through the cut-out portion.

Incidentally, in a mobile communication device in recent years, there are strong needs for more sophisticated case designs. In order to improve design of a hinge portion of a mobile communication device, proposed is a hinge structure that is capable of assembling from inside of the case, thereby eliminating the need for insertion holes and hinge caps (See JP2003-74536A1). The hinge structure is provided with a groove extending vertically with respect to the shaft axis from a bearing portion in the lower case to reach the surface of the lower case. Also, a body portion constituting one shaft portion of the pivotal shaft is engaged with a bearing portion (a through hole) in the upper case, and then a protruding portion constituting the other shaft portion of the pivotal shaft is matingly inserted into the bearing portion of the lower case along the aforementioned groove.

However, in the conventional mobile communication device as disclosed in the abovementioned Japanese patent publication, since one part of the bearing portion in the lower case is constructed to seal the groove by a separate case (protruding portion), it has a mechanical construction which is breakable by a force from inside the bearing portion. And the mechanical strength of the hinge portion can not be sufficiently increased.

A mobile communication device according to the preamble of claim 1 is known from document US 6076232 A. In particular this document discloses a hinge structure for electronic apparatus such as a word processor, a personal computer and the like having a cover. The hinge structure can meet the demand for making an electronic apparatus thin and light in weight and also can reduce the manufacturing cost of the equipment. The cover can rotate about a hinge 14 with respect to the main body of the equipment and can be maintained at a desired angular position. The hinge comprises a bush 51, a first hinge section 14a and second hinge sections 14b and 14c. The bush 51 comprises a first rotary section 52 and a second rotary section 53 which is rotatably coupled to the first rotary section. When the second rotary section is rotated about the shaft 52a of the first rotary section, a frictional force generates between a concave portion 54 of the second rotary section. The first hinge section is provided at one end of the main body of the electronic apparatus to fix the first rotary section while the second hinge section is provided at one end of the cover to fix the second rotary section.

Furthermore, document US 2004/142735 A1 discloses a mobile communication terminal having a main body and a folder pivotably connected to the main body, each having internal surfaces provided with a ground coated with conductive material; a hinge device including a conductive hinge housing received in the folder and connected to the grounds, a conductive coil spring received in the hinge housing and supported at one end of the hinge housing against an inner wall of one end of the hinge housing, and a conductive contact pin supported at one end against the other end of the coil spring and protruding through the other end of the hinge housing to be connected to the main body; and a conductive hinge dummy mounted within the main body and connected to the ground and the other end of the contact pin. Thus, operational characteristics of the terminal are improved and electromagnetic wave absorptance is reduced.

As further prior art, reference is made to EP 0777369 A2.

### SUMMARY OF THE INVENTION

In consideration of the above problem, it is an object of the present invention to provide a mobile communication device having a hinge structure with increased mechanical strength and improved outer appearance.

According to the invention this object is achieved by means of a mobile communication device according to claim 1. Advantageous embodiments are defined in dependent claims.

Thus, the mobile communication device includes a first case and a second case coupled together in such a manner to mutually pivot between a folded position and an unfolded position by way of a hinge structure, and comprises:
a bearing structure comprising a first bearing portion formed in the first case with open at one end and closed at the other end formed with the first case and a second bearing portion formed in the second case with open at both ends, wherein one end of the second bearing portion is positioned adjacent to the one end of the first bearing portion in the axial direction;
a pivotal shaft comprising a first shaft portion pivotally mounted on the first bearing portion and supported in such a manner to move in the axial direction and a second shaft portion pivotally mounted on the second bearing portion and supported in such a manner to move in the axial direction, wherein the first shaft portion and the second shaft portion are pivotally coupled to each other; and
an opening formed in either one of the first and second cases at a location adjacent to the bearing structure in the axial direction for permitting the pivotal shaft to pass through.

On the other hand, the hinge structure is the one for pivotally coupling a first case and a second case, comprising:
a bearing structure comprising a first bearing portion formed in the first case with open at one end and closed at the other end and a second bearing portion formed in the second case with open at both ends, wherein one end of the second bearing portion is disposed at a location adjacent to the one end of the first bearing portion in the axial direction;
a pivotal shaft comprising a first shaft portion pivotally mounted on the first bearing portion and supported in such a manner to move in the axial direction and a second shaft portion pivotally mounted on the second bearing portion and supported in such a manner to move in the axial direction; and
an opening formed in the second case at a location adjacent to the bearing structure in the axial direction.

In the mobile communication device and the hinge structure, the pivotal shaft can be inserted into one of the cases through the opening so as to be received on the first bearing portion and the second bearing portion, thereby eliminating the insertion hole for the hinge structure exposed to the end portion in the axial direction and also the hinge cap to cover such insertion hole that is required in the conventional design. As a result, it is possible to improve the outer appearance of the mobile communication device.

In the mobile communication device and the hinge structure, since the hinge structure is designed to have a rugged mechanical structure against the internal force from the first bearing portion, the hinge structure has a totally enhanced mechanical strength. Also, in assembling the hinge structure, since the first shaft portion can be inserted into the first bearing portion, there is no restriction in the cross sectional shape of the first bearing portion and the first shaft portion in the perpendicular direction thereto. As a result, it is possible to choose any desired cross sectional shape to provide sufficient mechanical strength to the hinge portion.

In the mobile communication device, further employed is a dummy bearing structure having a passage in the axial direction and formed in alignment with the axis of the bearing structure but at the other position of the opening in opposed to the bearing structure, thereby permitting wiring for making interconnection between the first case and the second case to pass through the passage. By permitting the wiring for interconnecting the first case and the second case to pass through the passage of the dummy bearing structure, there is no need for making a separate pass for the wiring. Such construction helps to reduce cost and size of the hinge structure.

Also, in the mobile communication device according to a preferred embodiment of the present invention, by forming a cover member for covering the opening with one of the cases, it is possible to prevent any foreign material to enter the opening and to improve the outer appearance of the mobile communication device because the opening is not exposed to outside the mobile communication device. Preferably, in the preferred embodiment of the present invention, the one case comprises an inner casing that opposes to the other case in the folded position and an outer casing that is removably mounted on the inner casing, wherein the cover member is formed in the outer casing of the one case. It is also preferable that a clamping member for clamping the second shaft portion in the axial direction is integrally formed with the cover member. In this case, there is no need for separately making the cover member and the clamping member, thereby reducing cost and enhancing assembling and disassembling efficiency of the mobile communication device.

In the mobile communication device according to a preferred embodiment of the present invention, the first shaft portion and the second shaft portion are designed to make a snap engagement at predetermined positions by a click mechanism, thereby improving operability of the mobile communication device.

Also, in the mobile communication device according to a preferred embodiment of the present invention, a protrusion is formed at one end of the pivotal shaft closed to the second shaft portion extending in the direction perpendicular to the shaft axis. The protrusion can be used in assembling or disassembling the hinge structure for easily installing or extracting the pivotal shaft from the first bearing portion and the second bearing portion.

### BRIEF DESCRIPTION OF THE DRAWINGS

Fig. 1 is a perspective view of the folding type mobile communication device according to one embodiment of the present invention with the outer casing of the upper case removed;
Fig. 2 is a perspective view of the outer casing of the upper case of the mobile communication device as shown in Fig. 1;
Fig. 3 is a cross section vi ew of the mobile communication device along the line III - III in Fig. 1; and
Fig. 4 is a perspective view of a conventional folding type mobile communication device with the hinge structure exploded.

### DESCRIPTION OF PREFERRED EMBODIMENTS

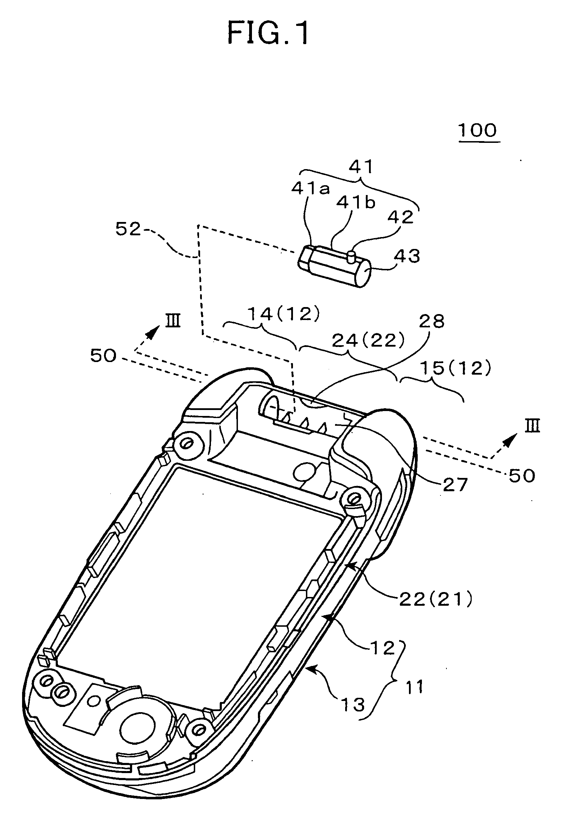

Now, an embodiment of the present invention will be described in detail with reference to the drawings. Fig. 1 shows the folding type mobile communication device according to one embodiment of the present invention with an outer casing of an upper case removed and with a pivotal shaft of a hinge structure exploded.

The mobile communication device 100 comprises a lower case 11 for housing various operation keys, a microphone, an antenna and the like and an upper case 21 for housing a liquid crystal display device, a speaker and the like. By the use of a pivotal shaft 41 to be inserted into a hinge portion that is formed at one edge portions of the lower case 11 and the upper case 21 and a dummy pivotal shaft 44, the lower case 11 and the upper case 21 can be pivoted between a folded position in which the lower case 11 and the upper case 21 are in contact with each other and an unfolded position in which the lower case 11 and the upper case 21 are unfolded to substantially flat to each other.

The lower case 11 comprises an inner casing 12 that faces inside the mobile communication device 100 and an outer casing 13 that faces outside of the mobile communication device 100. The inner casing 12 and the outer casing 13 are removably mounted by screws or the like. The inner casing 12 is formed with hinge portions 14, 15 constituting a hinge structure for the lower case 11 at one edge portion of the inner casing 12.

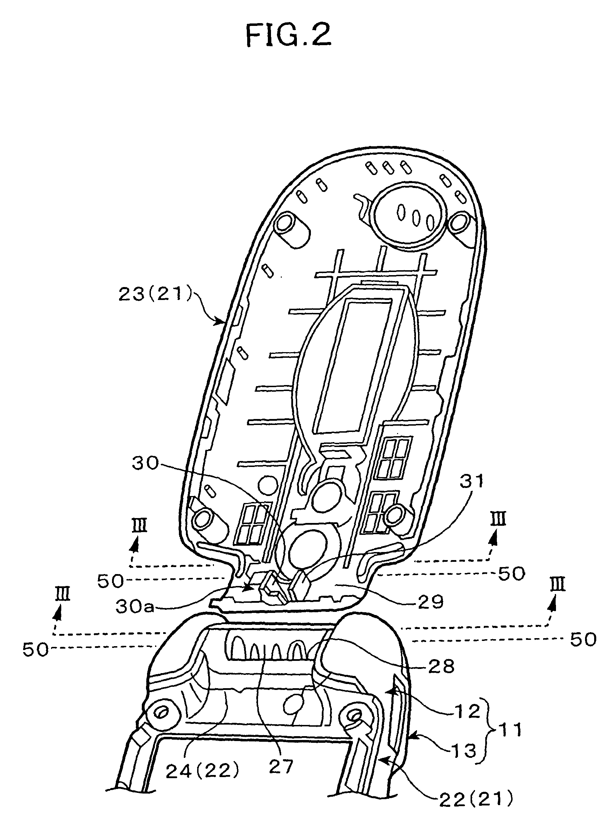

Fig. 2 shows the outer casing 13 of the upper case 11 of the mobile communication device 100 as shown in Fig. 1 with the inner casing 12 of the lower case 11 removed. On the other hand, the upper case 21 comprises an inner casing 22 that faces inside the mobile communication device 100 and an outer casing 23 that faces outside of the mobile communication device 100. The inner casing 22 and the outer casing 23 are removably mounted by screws or the like. A hinge portion 24 constituting the hinge structure for the upper case 21 is formed at one edge portion of the inner casing 22 and between the hinge portion 14 and the hinge portion 15 for the lower case 11.

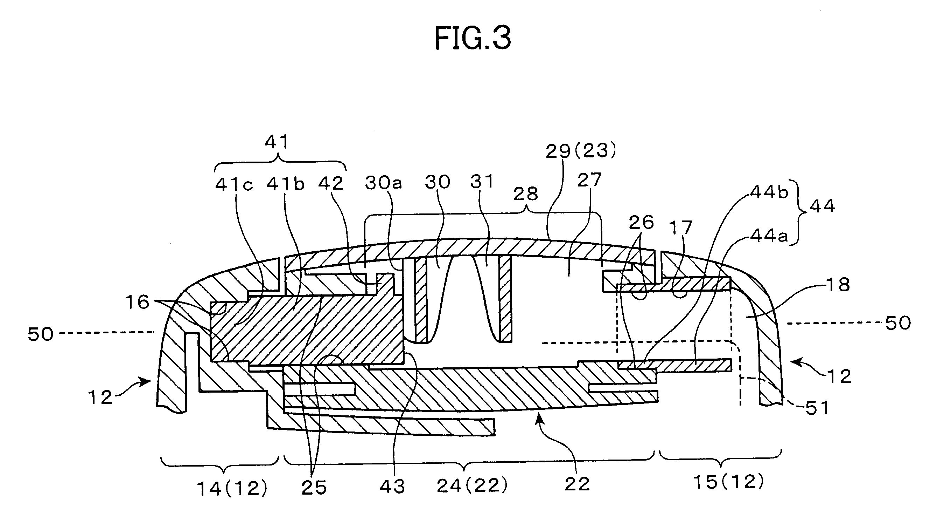

Fig. 3 shows a cross section view of the mobile communication device 100 as shown in Fig. 1 along the line III - III. There is formed a bearing portion 16 at one hinge portion 14 for the lower case 12 for supporting a shaft portion 41a of the pivotal shaft 41 having a click mechanism and a free stop mechanism therein. The bearing portion 16 is formed as a hexagonal channel.

The hollow dummy pivotal shaft 44 is disposed at the other hinge portion 15 in the lower case 12 for establishing a passage for a flexible circuit board in which wirings are provided. A dummy bearing portion 17 is formed as a part of arc for supporting the dummy pivotal shaft 44. Adjacent to and outside of the dummy bearing portion 17, a hollow passage 18 is formed to permit the flexible circuit board 51 to pass therethrough. The bearing portion 16 and the dummy bearing portion 17 are designed not to expose to the surface of the mobile communication device 100.

The hinge portion 24 for the upper case 21 is formed with a bearing portion 25 for supporting a shaft portion 41b of the pivotal shaft 41 at a location adjacent to the bearing portion 16 of the hinge portion 14 in the axial direction. The inner diameter of the bearing portion 25 is larger than the inner diameter of the bearing portion 16. Also a dummy bearing portion 26 is formed at a location adjacent to the dummy bearing portion 17 of the hinge portion 15 in the axial direction for supporting a dummy bearing portion 44b of the dummy pivotal shaft 44. The inner diameter of the dummy bearing portion 26 is smaller than that of the dummy bearing portion 17.

Furthermore, a cavity (or an accommodation portion) 27 for the pivotal shaft 41 is formed at the hinge portion 24 at a location adjacent to the bearing portion 25 opposed to the hinge portion 14. The cavity 27 has a sufficient size to receive the pivotal shaft 41 in a condition parallel to the axial direction. An opening 28 is formed in the side surface of the cavity 27 by cutting out the case at the hinge portion 24. The opening 28 is sized to insert or extract the pivotal shaft 41 in the perpendicular direction with respect to the axis 50 when the pivotal shaft 41 is parallel with the axial direction.

The outer casing 23 of the upper case 21 is provided with a cover (cover member) 29 for covering the opening 28. Also provided is a first rib (mounting member) 30 protruding inside the cavity 27 from the cover 29 in such a manner to abut against an end surface 43 of the hinge. Provided further is a second rib 31 protruding inside the cavity 27 from the cover 29 at a location closer to the dummy bearing portion 26 than the first rib 30 for stipulating the passage for the flexible circuit board 51. The first rib 30 and the second rib 31 are integrally formed with the outer casing 23.

The shaft portion 41a and the shaft portion 41b of the pivotal shaft 50 are coupled so that they mutually pivot about the axis 50. The shaft portion 41a and the shaft portion 41b are respectively inserted into the bearing portion 16 and the bearing portion 25 and have hexagonal shape in the cross section perpendicular to the axis 50 and in alignment with the axis 50. The outer diameter of the shaft portion 41b is larger than that of the shaft portion 41a.

The shaft portion 41b constitutes a main body of the pivotal shaft 41 and is formed with a free stop mechanism and a click mechanism therein for cooperating with the shaft portion 41a that is an end portion of the pivotal shaft 41. It is the free stop mechanism to allow the shaft portion 41a to stop at any desired angular position. It is the click mechanism to allow the shaft portion 41a to stop the shaft portion 41a at 0 degree (a folded position) and 150 degree (an unfolded position) angular positions in a snapping manner.

There is formed a protrusion 42 vertically protruding from one surface of the shaft portion 41b near the end portion. At the time of disassembling the hinge structure, the protrusion 42 can be utilized for easily pulling out the pivotal shaft 41 in the axial direction.

The dummy pivotal shaft 44 comprises a dummy shaft portion 44a and a dummy-shaft portion 44b mounted on the dummy shaft portion 44a. The dummy shaft portion 44a and the dummy-shaft portion 44b are cylindrical in alignment with the axis 50. The dummy shaft portion 44a and the dummy shaft portion 44b are sized so that the outer diameter of the dummy shaft portion 44a is larger than that of the dummy shaft portion 44b, thereby mating with the dummy bearing portion 17 and the dummy bearing portion 26, respectively.

In assembling the hinge structure, the lower case 11 is first completed before pushing the dummy shaft portion 44b into the dummy bearing portion 26 in the inner casing 22 of the upper case 21. Subsequently, the flexible circuit board that is connected to inside the lower case 11 is passed through the passage 18, inside the dummy-pivotal shaft 44 and the cavity 27 for making connection. Then, the inner casing 22 of the upper case 21 is placed on the lower case 11 with the hinge portion 24 between the hinge portion 14 and the hinge portion 15 as shown in Fig. 1. At this time, the dummy shaft portion 44a is mated with the arc portion of the dummy bearing portion 17.

Subsequently, as shown by the reference numeral in Fig. 1, the pivotal shaft 41 is inserted into the cavity 27 from the opening 28 in the perpendicular direction to the axis 50 with the shaft portion 41a oriented toward the hinge portion 14 and the pivotal shaft 41 in parallel with the axis 50. Then, the pivotal shaft 41 is pushed in toward the hinge portion 14 in the axial direction, thereby permitting the shaft portion 41a and the shaft portion 41b to mate with the bearing portion 16 and the bearing portion 25, respectively.

Then, the outer casing 23 of the upper case 21 and the inner casing 22 of the upper case 21 are integrated using screws or the like. At this time, the side surface 30a of the first rib is abuts against the end surface 43 of the hinge. And the second rib 31 defines the passage for the flexible circuit board 51 at the location closer to the hinge portion 15 from the second rib 31. In this manner, the mobile communication device 100 is assembled in the condition as shown in Fig. 3, thereby coupling the lower case 11 and the upper case 21 in such manner to pivot from each other.

In the hinge structure according to the embodiment of the present invention, since the pivotal shaft 41 is inserted into the bearing portions 16, 25 by way of the opening 28 and the cavity 27 without exposing to the outer surface of the mobile communication device 100, it is possible to eliminate the need for insertion openings and hinge caps for covering the openings that are exposed to the outer surface of the mobile communication device. As a result, the outer appearance of the mobile communication device 100 can be improved and the cost for the hinge caps can be eliminated.

The cover 29 for covering the opening 28 not only prevent any foreign matter from entering inside the opening 28 but also covers the opening 28 to improve outer appearance of the mobile communication device 100. Also, the cover 29 that is formed with the first rib 30 protruding in the cavity 27 effectively prevents the pivotal shaft 41 from falling into the cavity 27.

Since the mobile communication device has no groove reaching the outer surface of the bearing portion 16, it has a sufficient mechanical strength against the force from inside the bearing portion 16. Also, since the shaft portion 41b can be inserted in the axial direction with respect to the bearing portion 16 at the time of assembling the hinge structure, there is no restriction in the cross sectional shape in the direction perpendicular to the axis of the bearing portion 16 and the shaft portion 41b. As a result, the optimum cross sectional shape may be employed so that the hinge portion has the sufficient mechanical strength.

The hinge portion having the cavity and the opening is disposed in the upper case in the above embodiment. Inversely, it is possible that a casing portion having a cavity and an opening may be disposed in the lower case at a location adjacent to a hinge portion in the upper case.

Moreover, shown is the example that the shape of the shaft portions 41a, 41b and the bearing portions 16, 25 in cross section in perpendicular to their axis is hexagonal in the above embodiment. It is to be noted that various shapes other than hexagonal may be employed. By employing, for example, a square shape, it is possible to realize a mobile communication device in which the shaft portions 41a and 41b can be easily inserted into the bearing portions 16, 25 and the mating force can be enhanced.

Although a preferred embodiment of the present invention has been described hereinabove, it is to be noted that the mobile communication device and the hinge structure of the present invention should not be restricted to the particular construction as the above embodiment and various modifications and changes can be made on the mobile communication device and the hinge structure without departing from the scope of the present invention.

## Claims

1. A mobile communication device (100) including a first case (11) and a second case (21) coupled together by way of a hinge structure for pivoting between a folded position and an unfolded position, comprising:
a bearing structure comprising a first bearing portion (16) formed with the first case (11) with an opening at one end and closed at the other end, and a second bearing portion (25) formed with the second case (21) with openings at both ends, wherein one end of the second bearing portion (25) is disposed adjacent to the one end of the first bearing portion (16) in an axial direction;
a pivotal shaft (41) comprising a first shaft portion (41a) to be pivotally mounted on the first bearing portion (16) and supported thereby so that it is movable in the axial direction, and a second shaft portion (41b) pivotally mounted on the second bearing portion (25) and supported thereby so that it is movable in the axial direction; and
an opening (28) formed in either one of the first case (11) or the second case (21) at a location adjacent to the bearing structure in the axial direction in such a manner that the pivotal shaft (41) can be inserted therein, **characterized by** further comprising a dummy-bearing structure formed opposite the bearing structure across the opening in alignment with the axis (50) of the bearing structure and having a passage (18) in the axial direction so that wiring (51) for interconnecting the first case (11) and the second case (21) is permitted to pass through the passage 18).

2. A mobile communication device (100) of claim 1, wherein one of the first (11) and second (21) cases is formed with a removable cover member (29) to cover the opening (28).

3. A mobile communication device (100) of claim 2, wherein the one case (21) comprises an inner casing (22) that opposes to the other case (11) in the folded position and an outer casing (23) that is removably mounted on the inner casing (22), and the cover member (29) is formed in the outer casing (23) of the one case (21).

4. A mobile communication device (100) of claim 2 or 3, wherein a first rib (30) is integrally formed with the cover member (29) such as to form a clamping member for clamping the second shaft portion (41 b) in the axial direction by abutting against its end surface (43).

5. A mobile communication device (100) of either one of claims 1 to 4, wherein the first shaft portion (41a) and the second shaft portion (41 b) engages in a snapping manner at predetermined positions by a click mechanism.

6. A mobile communication device (100) of either one of claims 1 to 5, wherein the pivotal shaft (41) is formed with a protrusion (42) at an end portion closer to the second shaft portion (41 b) in the direction perpendicular to the shaft axis.

## Patentansprüche

1. Mobile Kommunikationsvorrichtung (100), aufweisend ein erstes Gehäuse (11) und ein zweites Gehäuse (21), die mittels einer Scharnierstruktur zum Schwenken zwischen einer zusammengeklappten Position und einer aufgeklappten Position aneinandergekoppelt sind, umfassend:
eine Tragstruktur, die einen ersten Tragbereich (16), der am einen Ende mit einer Öffnung und am anderen Ende geschlossen mit dem ersten Gehäuse (11) mit ausgebildet ist, sowie einen zweiten Tragbereich (25) umfaßt, der mit dem zweiten Gehäuse (21) mit Öffnungen an beiden Enden ausgebildet ist, wobei ein Ende des zweiten Tragbereichs (25) in einer axialen Richtung angrenzend an das eine Ende des ersten Tragbereichs (16) angeordnet ist;
eine schwenkbare Welle (41), die einen ersten Wellenbereich (41a), der schwenkbar am ersten Tragbereich (16) anzubringen und durch diesen so getragen ist, dass er in der axialen Richtung bewegbar ist, sowie einen zweiten Wellenbereich (41b) umfaßt, der schwenkbar am zweiten Tragbereich (25) angebracht und durch diesen so getragen ist, dass
er in der axialen Richtung bewegbar ist; und
eine Öffnung (28), die entweder im ersten Gehäuse (11) oder im zweiten Gehäuse (21) an einer Position ausgebildet ist, die in der axialen Richtung so an die Tragstruktur angrenzt, dass die schwenkbare Welle (41) in sie eingeführt werden kann, **dadurch gekennzeichnet, dass** sie ferner eine Dummy-Tragstruktur umfaßt, die über die Öffnung hin in Ausrichtung mit der Achse (50) der Tragstruktur gegenüber der Tragstruktur ausgebildet ist und in der axialen Richtung einen Durchgang (18) aufweist, so dass es möglich ist, dass eine Verdrahtung (51) zum Verbinden des ersten Gehäuses (11) mit dem zweiten Gehäuse (21) durch den Durchgang (18) hindurch verlaufen kann.

2. Mobile Kommunikationsvorrichtung (100) nach Anspruch 1, wobei das erste (11) oder das zweite (21) Gehäuse mit einem abnehmbaren Abdeckelement (29) ausgebildet ist, um die Öffnung (28) abzudecken.

3. Mobile Kommunikationsvorrichtung (100) nach Anspruch 2, wobei das eine Gehäuse (21) ein Innengehäuse (22), das dem anderen Gehäuse (11) in zusammengeklappter Position gegenüberliegt, sowie ein Außengehäuse (23) umfaßt, das abnehmbar am Innengehäuse (22) angebracht ist, und wobei das Abdeckelement (29) im Außengehäuse (23) des einen Gehäuses (21) ausgebildet ist.

4. Mobile Kommunikationsvorrichtung (100) nach Anspruch 2 oder 3, wobei eine erste Rippe (30) einstückig mit dem Abdeckelement (29) ausgebildet ist, so dass es ein Klemmelement zum Festklemmen des zweiten Wellenbereichs (41b) in der axialen Richtung bildet, indem es gegen dessen Endoberfläche (43) anliegt.

5. Mobile Kommunikationsvorrichtung (100) nach einem der Ansprüche 1 bis 4, wobei der erste Wellenbereich (41a) und der zweite Wellenbereich (41 b) an vorgegebenen Positionen mittels eines Schnappmechanismus schnappend miteinander in Eingriff kommen.

6. Mobile Kommunikationsvorrichtung (100) nach einem der Ansprüche 1 bis 5, wobei die schwenkbare Welle (41) an einem Endbereich, der in der Richtung senkrecht zur Wellenachse näher am zweiten Wellenbereich (41b) liegt, mit einem Vorsprung (42) ausgebildet ist.

## Revendications

1. Dispositif de communication mobile (100) incluant un premier boîtier (11) et un second boîtier (21) couplés ensemble à l'aide d'une structure de charnière pour pivotement entre une position pliée et une position non pliée, comprenant :
une structure porteuse comprenant une première portion porteuse (16) formée avec le premier boîtier (11) avec une ouverture à une extrémité et fermée à l'autre extrémité, et une seconde portion porteuse (25) formée avec le second boîtier (21) avec des ouvertures aux deux extrémités, une extrémité de la seconde portion porteuse (25) étant disposée adjacente à la première extrémité de la première portion porteuse (16) dans une direction axiale ;
un arbre pivotant (41) comprenant une première portion d'arbre (41a) pour être montée avec faculté de pivotement sur la première portion porteuse (16) et supportée de ce fait de sorte qu'elle peut se déplacer dans la direction axiale, et une seconde portion d'arbre (41b) montée avec faculté de pivotement sur la seconde portion porteuse (25) et supportée de ce fait de sorte qu'elle peut se déplacer dans la direction axiale ; et
une ouverture (28) formée dans l'un ou l'autre du premier boîtier (11) ou du second boîtier (21) à un emplacement adjacent à la structure porteuse dans la direction axiale de telle manière que l'arbre pivotant (41) peut y être inséré, **caractérisé en ce qu'**il comprend en outre une structure porteuse fantôme formée opposée à la structure porteuse à travers l'ouverture en alignement avec l'axe (50) de la structure porteuse et ayant un passage (18) dans la direction axiale de sorte qu'un câblage (51) permettant de relier le premier boîtier (11) et le second boîtier (21) peut passer à travers le passage (18).

2. Dispositif de communication mobile (100) selon la revendication 1, dans lequel l'un des premier (11) et second (21) boîtiers est formé avec un organe formant couverture amovible (29) permettant de couvrir l'ouverture (28).

3. Dispositif de communication mobile (100) selon la revendication 2, dans lequel un des boîtiers (21) comprend une enveloppe interne (22) qui s'oppose à l'autre boîtier (11) dans la position pliée et une enveloppe externe (23) qui est montée de façon amovible sur l'enveloppe interne (22), et l'organe formant couverture (29) est formé dans l'enveloppe externe (23) du boîtier (21).

4. Dispositif de communication mobile (100) selon la revendication 2 ou 3, dans lequel une première nervure (30) est formée solidairement avec l'organe formant couverture (29) de façon à former un organe de serrage permettant de serrer la seconde portion d'arbre (41b) dans la direction axiale par butée contre sa surface d'extrémité (43).

5. Dispositif de communication mobile (100) selon l'une quelconque des revendications 1 à 4, dans lequel la première portion d'arbre (41a) et la seconde portion d'arbre (41b) se mettent en prise par emboîtement à des positions prédéterminées par un mécanisme cliquet.

6. Dispositif de communication mobile (100) selon l'une quelconque des revendications 1 à 5, dans lequel l'arbre pivotant (41) est formé avec une protubérance (42) à une portion d'extrémité plus proche de la seconde portion d'arbre (41b) dans la direction perpendiculaire à l'axe de l'arbre.
